(19) Europäisches Patentamt
European Patent Office
Office européen des brevets

(11) **EP 1 716 393 B1**

(12) **FASCICULE DE BREVET EUROPEEN**

(45) Date de publication et mention
de la délivrance du brevet:
**20.04.2016 Bulletin 2016/16**

(21) Numéro de dépôt: **05729319.3**

(22) Date de dépôt: **16.02.2005**

(51) Int Cl.:
*G01F 1/50* $^{(2006.01)}$    *G01F 1/36* $^{(2006.01)}$

(86) Numéro de dépôt international:
**PCT/FR2005/000352**

(87) Numéro de publication internationale:
**WO 2005/080924 (01.09.2005 Gazette 2005/35)**

(54) **DEBITMETRE INSTATIONNAIRE**

MESSGERÄT FÜR UNSTETIGE STRÖMUNGEN

UNSTEADY FLOW METER

(84) Etats contractants désignés:
**AT BE BG CH CY CZ DE DK EE ES FI FR GB GR HU IE IS IT LI LT LU MC NL PL PT RO SE SI SK TR**

(30) Priorité: **16.02.2004 FR 0401527**

(43) Date de publication de la demande:
**02.11.2006 Bulletin 2006/44**

(73) Titulaires:
- **Centre National de la Recherche Scientifique (CNRS)**
  **75026 Paris (FR)**
- **UNIVERSITE DE POITIERS**
  **86000 Poitiers (FR)**

(72) Inventeurs:
- **FOUCAULT, Eric**
  **F-86000 Poitiers (FR)**

- **SZEGER, Philippe**
  **F-86800 Saint Julien L'Ars (FR)**
- **LAUMONIER, Janick**
  **F-86000 Poitiers (FR)**
- **MICHEAU, Philippe**
  **Rock Forest, Quebec J1N 2W5 (CA)**

(74) Mandataire: **Regimbeau**
**20, rue de Chazelles**
**75847 Paris Cedex 17 (FR)**

(56) Documents cités:
**EP-A- 0 496 661     DE-A1- 2 459 811**
**US-A- 3 469 446     US-A- 4 799 169**
**US-A- 5 365 795     US-A1- 2003 136 196**

EP 1 716 393 B1

Printed by Jouve, 75001 PARIS (FR)

## Description

La présente invention concerne le domaine de la mesure du débit instantané d'un fluide en écoulement instationnaire.

Elle trouve notamment - mais non limitativement - avantageusement application dans les domaines du génie des procédés et de l'industrie automobile.

Plus particulièrement, elle trouve avantageusement application dans le contrôle et la régulation des moteurs thermiques, les centres d'essais et laboratoires de recherche, ainsi que toutes les applications actuelles des débitmètres de l'art antérieur.

Plus particulièrement, elle trouve avantageusement application dans toutes les situations où l'écoulement étant instationnaire, la connaissance du débit impose une intégration dans le temps et dans l'espace de la vitesse.

## PRESENTATION GENERALE DE L'ART ANTERIEUR

Les mesures de débits sont des éléments essentiels à l'optimisation des processus industriels.

A l'heure actuelle, pour connaître le débit d'un fluide en écoulement instationnaire à un instant donné, il est généralement nécessaire de mettre en oeuvre des techniques de mesure permettant de déterminer la vitesse de ce fluide. Une fois que l'on a déterminé un ensemble de vitesses pour différents instants, on intègre spatialement cet ensemble de vitesses afin d'avoir accès à l'évolution du débit en fonction du temps.

Il a déjà été proposé de nombreux systèmes et méthodes permettant l'obtention du débit d'un fluide en écoulement instationnaire par la détermination de la vitesse de ce fluide.

Les documents DE 24 59 811, US 2003/136196 et EP 0 496 661 décrivent des exemples de tels systèmes et méthodes.

A tire d'exemples complémentaires, on peut citer les méthodes LDV et PIV ainsi que les systèmes qui leurs sont associés.

La méthode PIV dite de Vélocimétrie par Images de Particules est basée sur la mesure du déplacement de petites particules. La détermination de la vitesse du fluide à un instant donné est réalisée de la façon suivante. Le fluide en écoulement est ensemencé en particules, et est illuminé par un laser. Le laser émet deux impulsions décalées d'un court intervalle de temps. Une caméra CCD synchronisée au laser enregistre une image pour chaque impulsion du laser. Les deux images obtenues sont ensuite traitées. Le déplacement des particules entre la première et la deuxième image est mesuré en utilisant une technique de corrélation. En divisant le déplacement des particules entre les deux images par la durée séparant l'enregistrement de chacune de ces images, on obtient la vitesse du fluide en écoulement. Cette détermination de la vitesse du fluide permet de déduire le débit de ce fluide.

La méthode LDV dite de Vélocimétrie Doppler Laser est basée sur la mesure d'une fréquence Doppler. Le fluide en écoulement est ensemencé en particules et est illuminé à l'aide de deux lasers dont les faisceaux se croisent. La lumière dispersée provenant des particules passant l'intersection des deux faisceaux lasers produit une fréquence de Doppler proportionnelle à la vitesse de la particule. Le calcul de cette vitesse permet d'obtenir le débit du fluide en écoulement. La visualisation du flux est réalisée de la même manière que dans le cas PIV.

Ces méthodes et systèmes présentent les inconvénients suivants :

- les méthodes PIV et LDV ne permettent pas de déterminer le débit d'un fluide en temps réel. En effet, ces techniques imposent un post-traitement des images acquises afin d'obtenir la vitesse du fluide.
- la mise en oeuvre de telles techniques est lourde et coûteuse.
- ces méthodes sont mal résolues en temps et possèdent donc une faible bande passante (généralement moins de 10 Hz pour la méthode PIV).
- le fluide doit être ensemencé en particules.
- le fluide et la conduite doivent être transparents.

Une autre méthode permettant d'obtenir le débit d'un fluide en écoulement instationnaire à partir de sa vitesse utilise le tube de Pitot.

Le tube de Pitot est un instrument servant à déterminer la vitesse d'un fluide en écoulement grâce à la mesure d'une différence de pression. Pour déterminer la vitesse d'un fluide en écoulement dans une conduite, on doit connaître la direction et le sens de l'écoulement. On plonge le tube de Pitot dans la conduite de sorte que le tube soit parallèle à la direction de l'écoulement et que l'avant du tube de Pitot fasse front à l'écoulement. Une première pression est obtenue par une première prise de pression située sur la paroi latérale du tube de Pitot. Cette première pression mesurée est une pression statique. Une deuxième pression est obtenue par une prise de pression située à l'avant du tube. Cette pression est la pression totale du fluide. La mesure de l'écart entre ces deux pressions permet de calculer la vitesse du fluide en écoulement. A partir du calcul de cette vitesse, on peut obtenir le débit du fluide en écoulement.

Cette méthode et ce système présentent les inconvénients suivants :

- la direction et le sens de l'écoulement doivent être connus et constants pour mettre en place le tube de Pitot.
- lorsque le sens de l'écoulement varie, la mesure de pression totale est faussée, ce qui induit une erreur dans l'obtention de la mesure de la vitesse.
- ce type de système est intrusif et perturbe donc l'écoulement.

Une dernière méthode permettant l'obtention du débit d'un fluide en écoulement instationnaire à partir de sa vitesse est la méthode dite du fil chaud.

La méthode du fil chaud repose sur le transfert de chaleur autour d'un fil chauffé par un circuit électrique. On place dans le fluide en écoulement un fil porté par effet Joule à une température supérieure à la température de ce fluide. Il se produit un échange de chaleur par convection : le fil est refroidi par le fluide en écoulement. Il est alors possible de déterminer la vitesse du fluide en écoulement en calculant la puissance qu'il faut fournir au fil pour le maintenir à une température constante. Une fois la vitesse du fluide connue, il est possible d'en déduire le débit du fluide en écoulement instationnaire.

Cette méthode et ce système présentent les inconvénients suivants :

- la méthode est ponctuelle et insensible au sens de l'écoulement du fluide.
- les mesures dans les liquides, qui sont la plupart du temps conducteurs, nécessitent que le fil chaud (chauffé par le circuit électrique) soit isolé électriquement.
- il faut étalonner le système.
- le fil vieillit assez rapidement ce qui impose une maintenance coûteuse.
- la mise en oeuvre, et notamment les dimensions du fil, induit une grande fragilité du système.
- c'est une méthode intrusive et donc susceptible de perturber l'écoulement.

Un but de la présente invention est de fournir une méthode et un système de mesure en temps réel du débit d'un fluide en écoulement instationnaire, permettant de pallier la plupart des inconvénients précités.

## PRESENTATION DE L'INVENTION

L'invention concerne un système de mesure en temps réel du débit instantané d'un fluide en écoulement stationnaire ou instationnaire dans une conduite, et un procédé de mesure associé, tels que décrit dans les revendications annexées.

## PRESENTATION DES FIGURES

D'autres caractéristiques, buts et avantages de la présente invention ressortiront encore de la description qui suit, laquelle est purement illustrative et non limitative et doit être lue en regard des dessins annexés, sur lesquels :

- la figure 1 illustre une vue en coupe d'un mode de réalisation de la présente invention ;
- la figure 2 illustre un bloc-diagramme à mettre en oeuvre pour déterminer le débit d'un fluide conformément à la présente invention ;
- la figure 3 illustre un exemple d'algorithme numérique à mettre en oeuvre pour déterminer le débit d'un fluide qui ne fait pas partie de l'invention.
- la figure 4 illustre une comparaison entre le débit mesuré par le procédé de la présente invention et le débit mesuré à partir de la méthode du fil chaud ;

## DESCRIPTION DE L'INVENTION

Un but de la présente invention est d'établir un procédé et un système permettant la mesure du débit d'un fluide en écoulement instationnaire dans une conduite, même lorsque le sens de l'écoulement varie au cours du temps, et le débit mesuré rendant compte du sens de l'écoulement.

Dans cette optique, les inventeurs ont établit une relation entre le débit instantané et la pression pour un fluide en écoulement instationnaire en conduite qui permet de calculer un débit en temps réel, la valeur de ce débit pouvant être positive ou négative, de sorte que le signe du débit calculé indique le sens de l'écoulement du fluide.

Pour cela, les inventeurs sont partis des équations de l'aérodynamique. En appliquant les approximations habituelles des écoulements en conduite à l'équation de bilan d'énergie cinétique d'une part, et en remplaçant chaque terme de vitesse d'écoulement par son expression en fonction du débit dans l'équation de bilan de l'énergie cinétique d'autre part, les inventeurs ont obtenu une formule reliant le débit instantané et la pression pour un fluide en écoulement instationnaire quasi unidirectionnel en conduite.

Cette formule est une équation différentielle de la forme suivante :

$$\mathrm{d}q(t)/\mathrm{d}t + \alpha(q(t)) = \beta \times \Delta p(t),$$

où

- - q(t) représente le débit volumique recherché,
- dq(t)/dt représente la dérivée par rapport au temps du débit recherché,
- $\alpha$(q(t)) représente une fonction dépendant de la géométrie du système, du fluide et du débit q(t),
- $\beta$ représente un coefficient fonction de la géométrie du dispositif,
- $\Delta$p(t) représente la différence de pression mesurée.

Le fait que la formule décrite ci-dessus soit une équation différentielle permet d'obtenir le débit volumique en temps réel, ce qui ne pourrait pas être fait correctement avec une équation algébrique.

Cette équation différentielle provient directement des équations de la mécanique des fluides. Cette formule, ou équation, présente la particularité de rendre compte du sens de l'écoulement. Le second terme du membre de gauche $\alpha$(q(t)) est une fonction du débit paramétrée par la géométrie du dispositif et par le sens de l'écoulement. Cette propriété autorise la mesure du débit même lorsque l'écoulement s'inverse.

La présence, dans la formule, de termes dont le signe varie en fonction de la variation de la vitesse d'écoulement du fluide dans la conduite et/ou du sens de l'écoulement (terme $\Delta$p(t)), et de termes dont le signe varie en fonction du sens de l'écoulement du fluide dans la conduite (termes dq(t)/dt et $\alpha$(q(t))) permet de calculer un débit positif ou négatif, dont le signe rend compte du sens de l'écoulement du fluide.

Notamment, dans la formule décrite ci-dessus, le terme $\Delta$p(t) est pris en compte tel quel, sans valeur absolue. Le signe attribué à la différence de pression $\Delta$p(t) varie notamment en fonction de la variation de vitesse d'écoulement du fluide et/ou en fonction du sens de l'écoulement du fluide. La différence de pression $\Delta$p(t) est donc positive ou négative, par exemple lorsque le fluide s'écoulant dans la conduite accélère ou décélère, et/ou lorsque le fluide s'écoule dans la conduite dans un sens ou dans son sens opposé.

Par ailleurs, dans la formule décrite ci-dessus, les termes dq(t)/dt et $\alpha$(q(t)) sont également pris en compte tel quel, sans valeur absolue.

Ceci permet de calculer un débit dont la valeur peut être positive ou négative, contrairement aux dispositifs de l'art antérieur qui ne sont capables de calculer que des débits positifs, et pas des débits négatifs.

Le signe du débit calculé permet de rendre compte du sens de l'écoulement, et les inversions de signe du débit calculé permettent de rendre compte des inversions de sens d'écoulement du fluide.

Par exemple, si le débit calculé, à t = $t_1$, est égal à (-20 m³/s), cela signifie que le fluide s'écoule de gauche à droite dans la conduite. Si le débit calculé, à t = $t_2$, est égal à (+5 m³/s), alors cela signifie qu'il y a eu inversion du sens de l'écoulement entre t = $t_1$ et t = $t_2$, et que le fluide s'écoule de droite à gauche dans la conduite à t = $t_2$.

Le lecteur aura compris qu'on entend par « valeur absolue » la racine carré du carré d'un nombre, cette valeur pouvant être positive ou nulle (mais jamais négative).

Cette équation différentielle présente une forme originale qui possède la propriété de toujours converger pour peu que la condition initiale soit correctement choisie de l'ordre de grandeur du débit à trouver. Préférentiellement, on choisira comme condition initiale lorsque l'écoulement change de sens q(t=0) = 0.

## DESCRIPTION D'UN MODE DE REALISATION DE L'INVENTION

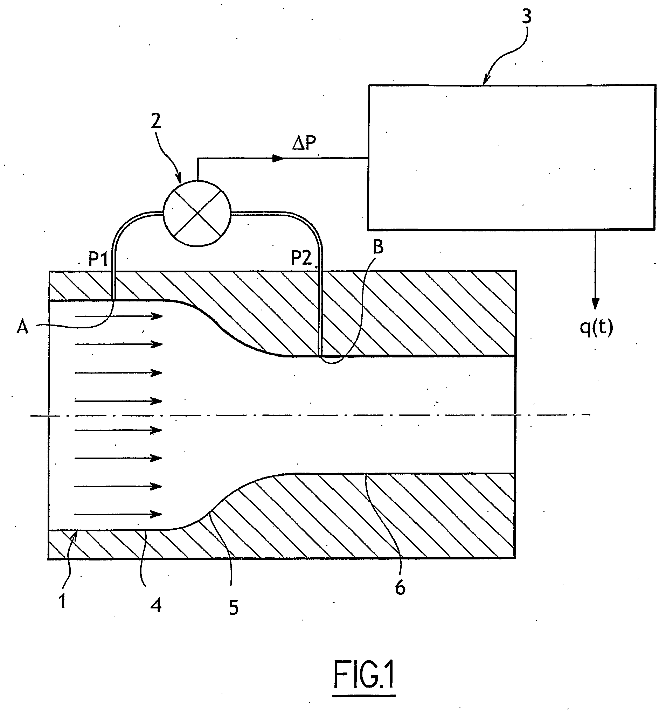

Comme représenté à la figure 1, les inventeurs ont réalisé un système apte à mesurer en temps réel le débit d'un fluide dans une conduite à partir d'une différence de pression. Ce système est un débitmètre et se compose principalement d'un organe déprimogène 1 s'insérant dans la conduite, d'un moyen 2 de mesure d'une différence de pression, et d'un moyen 3 de calcul adapté pour calculer le débit en temps réel.

L'organe déprimogène 1 représenté à la figure 1 est un convergent. Il s'agit d'une conduite profilée comportant une première partie 4 cylindrique présentant une section S1. Cette première partie 4 se termine par une deuxième partie 5 convergente qui aboutit à une troisième partie 6 cylindrique de section inférieure à S1. Deux prises de pression statique A et B sont placées respectivement sur la paroi de la première partie 4 cylindrique et sur la paroi de la troisième partie 6 cylindrique de section inférieure.

Le moyen 2 de mesure d'une différence de pression représenté à la figure 1 est un capteur de pression différentielle. Le moyen de mesure de pression différentielle est raccordé aux deux prises de pression statique A et B de l'organe déprimogène 1. Le moyen 2 de mesure de pression différentielle permet de mesurer la différence entre les deux pressions statiques.

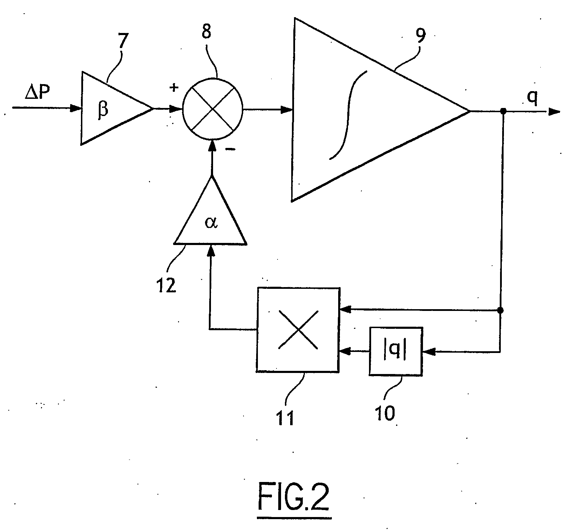

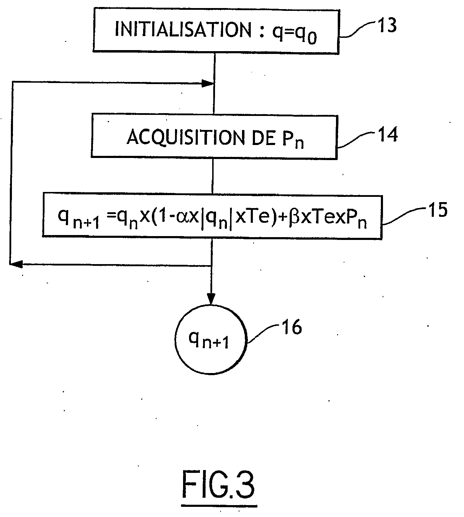

Le moyen 3 de calcul est un calculateur électronique. Ce moyen 3 de calcul est programmé pour mettre en oeuvre l'algorithme de résolution de la formule permettant le calcul du débit, le signe de ce débit rendant compte du sens de l'écoulement. Le moyen de calcul est adapté pour calculer le débit en temps réel par la résolution d'une formule reliant le débit instantané à la différence de pression, cette différence de pression étant positive ou négative dans ladite formule (en fonction de la variation de la vitesse d'écoulement du fluide dans la conduite et/ou du sens de l'écoulement du fluide). La formule reliant le débit instantané à la différence de pression présente l'avantage de permettre au moyen de calcul de calculer un débit quelque soit le sens du courant, de détecter le sens d'écoulement du fluide, et de détecter les changements de sens d'écoulement du fluide. Ce moyen de calcul peut être numérique ou analogique comme représenté aux figures 2 et 3.

Le principe de fonctionnement du système de mesure de la figure 1 est le suivant. Le fluide s'écoule dans une conduite et passe dans l'organe déprimogène 1.

Le moyen 2 de mesure d'une différence de pression mesure la différence entre la pression statique P1 acquise au niveau de la prise de pression A, et la pression statique P2 acquise au niveau de la prise de pression B. La différence de pression mesurée par le moyen 2 de mesure est transmise sous la forme d'un signal électrique en entrée du moyen 3 de calcul.

Le moyen 3 de calcul calcule le débit du fluide en temps réel à partir de la différence de pression reçue en entrée. En effet, le moyen 3 de calcul est adapté pour résoudre la formule reliant le débit à la différence de pression, cette formule permettant le calcul du débit en temps réel et donnant en outre le sens de l'écoulement du fluide.

A la sortie du moyen 3 de calcul, on obtient le débit du fluide en écoulement instationnaire.

Le dispositif de la figure 1 permet donc de mesurer en temps réel le débit d'un fluide dans une conduite. La mesure de ce débit ne nécessite que deux mesures de pression statique, ce qui est obtenu par un unique capteur de pression différentielle. La mise en oeuvre du dispositif de la présente invention est donc simplifiée, la présence d'un seul capteur de pression différentielle dans le dispositif induit un coût réduit dudit dispositif.

Par ailleurs, contrairement aux systèmes de l'art antérieur, le dispositif de la présente invention autorise les inversions de sens de l'écoulement, et rend compte du sens de l'écoulement.

De plus, le dispositif de la figure 1, ne nécessite pas d'étalonnage en débit, et la présence unique de deux prises de pression en paroi ne perturbe pas l'écoulement par rapport à un système de mesure par fil chaud ou tube de Pitot par exemple, où la sonde est introduite directement dans la conduite.

Le schéma bloc de la figure 2 présente d'une manière canonique l'intégration de l'équation différentielle permettant le calcul du débit et rendant compte du sens de l'écoulement, par un système en boucle fermée. Ce schéma constitue un intégrateur bouclé par une rétroaction négative qui assure la stabilité asymptotique de la forme intégrale de l'équation différentielle, c'est-à-dire de la formule permettant le calcul du débit en temps réel et donnant le sens de l'écoulement.

Le moyen 3 de calcul est analogique. Comme représenté à la figure 2, le moyen de calcul se compose d'un premier amplificateur 7 (qui peut être purement passif), d'un soustracteur 8, d'un intégrateur 9, et d'une boucle de contre réaction comprenant un circuit 10 (ou module) réalisant la fonction valeur absolue, un multiplieur 11 à deux entrées et un second amplificateur 12. La boucle de contre réaction permet de renvoyer en entrée du soustracteur 8 une valeur fonction du débit calculé obtenu en sortie du moyen de calcul (c'est-à-dire en sortie de l'intégrateur 9).

L'entrée du premier amplificateur 7 correspond à l'entrée du moyen de calcul. Le premier amplificateur 7 amplifie le signal d'entrée du moyen de calcul par un coefficient $\beta$. Ce coefficient correspond à la valeur du coefficient $\beta$ de l'équation différentielle. Ce coefficient est fonction de la géométrie du dispositif et plus particulièrement de la géométrie de l'organe déprimogène. La détermination de la valeur de ce coefficient est effectuée une fois pour toute. Cette détermination peut être effectuée de différentes manières, par exemple :

- par étalonnage comparatif,
- en évaluant directement le débit d'un écoulement réel ou simulé, constant ou périodique de période T (dans le cas simulé cela nécessite de connaître l'étalonnage en pression du capteur différentiel),
- par calcul.

Le premier amplificateur 7 reçoit en entrée le signal d'entrée du moyen de calcul. Ce signal d'entrée du moyen de calcul est un signal représentatif de la différence de pression. Il est issu du moyen 2 de mesure de pression différentielle. La sortie de ce premier amplificateur 7 entre sur le soustracteur 8.

Le soustracteur 8 permet de faire la différence entre le signal de sortie du premier amplificateur 7 et le signal issu de la boucle de contre réaction. Ce signal issu de la boucle de contre réaction correspond au terme $\alpha(q(t))$ de l'équation différentielle (ici on a $\alpha(q(t)) = \alpha \times q(t) \times |q(t)|$).

La sortie du soustracteur 8 sert d'entrée à l'intégrateur 9. Cet intégrateur 9 permet d'intégrer en temps réel le signal de sortie du soustracteur 8. Le signal de sortie du soustracteur 8 correspond à la dérivée par rapport au temps du débit recherché (en effet, d'après la formule on a $dq(t)/dt = \beta \times \Delta p(t) - \alpha(q(t))$). Le signal fourni à la sortie de l'intégrateur 9 correspond au débit recherché q. Il s'agit de la sortie du moyen de calcul.

Le signal fourni à la sortie de l'intégrateur 9 est envoyé à l'entrée du multiplieur 11. Il est également envoyé sur l'entrée du circuit 10 réalisant la fonction valeur absolue. La sortie du circuit 10 réalisant la fonction valeur absolue sert de deuxième entrée au multiplieur 11.

Le multiplieur 11 effectue la multiplication du signal de sortie de l'intégrateur 9 avec le signal de sortie du circuit 10 réalisant la fonction valeur absolue. La sortie du multiplieur 11 sert d'entrée au deuxième amplificateur 12.

Le deuxième amplificateur 12 (qui peut être purement passif) amplifie le signal de sortie par un coefficient $\alpha$. Ce coefficient est fonction de la géométrie du dispositif et plus particulièrement de la géométrie de l'organe déprimogène 1 ; il dépend également des caractéristiques du fluide. La détermination de la valeur de ce coefficient est effectuée une fois pour toute. Cette détermination peut être effectuée de différentes manières, par exemple :

- par étalonnage comparatif,
- en évaluant directement le débit d'un écoulement réel ou simulé, périodique de période T (dans le cas simulé cela nécessite de connaître l'étalonnage en pression du capteur différentiel),
- par calcul.

Dans la pratique, la détermination des paramètres $\alpha$ et $\beta$ en fonctionnement conduit à des réglages qui sont interdépendants.

Le principe de fonctionnement du moyen de calcul de la figure 2 est le suivant.

Comme il a été indiqué précédemment, l'équation différentielle reliant le débit d'un fluide en écoulement instationnaire à une différence de pression présente une forme originale qui possède la propriété de toujours converger pour peu que la condition initiale soit correctement choisie de l'ordre de grandeur du débit moyen (par exemple q(t=0) = 0 lorsque le débit change de sens). Cela signifie qu'étant donnée une condition initiale sur le signal de sortie de l'intégrateur, ce signal de sortie va converger vers une valeur représentative du débit recherché.

Au départ, on aura par exemple en sortie de l'intégrateur un signal nul (q(t=0) = 0). Le moyen de calcul reçoit en entrée un signal représentatif de la différence de pression entre les deux prises de pression. Ce signal est amplifié par le premier amplificateur 7. Le signal de sortie de ce premier amplificateur correspond au terme $\beta \times \Delta p(t)$ de l'équation différentielle.

Le signal de sortie du premier amplificateur 7 est transmis sur la première entrée du soustracteur 8. Le signal issu de la boucle de contre réaction arrive sur la deuxième entrée du soustracteur 8 (au départ égale à zéro puisque la condition initiale choisie est q(t=0) = 0). Le soustracteur 8 effectue la soustraction de ces deux signaux. Le signal de sortie du soustracteur correspond au terme dq/dt dans l'équation différentielle.

Le signal de sortie du soustracteur 8 est envoyé sur l'intégrateur 9. Ce signal est intégré par l'intégrateur 9 qui délivre en sortie un signal représentatif du débit recherché q.

Le signal de sortie de l'intégrateur 9 est envoyé en sortie du moyen de calcul et en entrée de la boucle de contre réaction. Le signal d'entrée de la boucle de contre réaction est envoyé sur une des entrées du multiplieur 11, et sur l'entrée du circuit 10 réalisant la fonction valeur absolue. Le signal de sortie de l'intégrateur 9 et le signal de sortie du circuit 10 réalisant la valeur absolue sont multipliés par le multiplieur 11.

La sortie du multiplieur 11 est ensuite envoyée sur le second amplificateur 12 qui l'amplifie. La sortie du second amplificateur 12 correspond au terme $\alpha(q(t))$ de l'équation différentielle.

Le signal de sortie du second amplificateur est renvoyé sur la deuxième entrée du soustracteur. Ce signal tient compte du sens de l'écoulement.

Le soustracteur effectue la soustraction du signal de sortie du premier amplificateur avec le signal de sortie du second amplificateur. La sortie du soustracteur est intégrée par l'intégrateur qui délivre en sortie un signal représentatif du débit q(t). Au cours du temps, le signal de sortie de l'intégrateur, qui correspond au signal de sortie du moyen de calcul converge vers une valeur correspondant à la solution instantanée de l'équation différentielle.

Le moyen de calcul analogique de la figure 2 permet donc de calculer le débit instantané et de donner le sens d'écoulement d'un fluide en écoulement instationnaire.

Dans l'exemple représenté sur la figure 3 qui ne fait pas partie de l'invention, le moyen de calcul électronique peut également être numérique. On a représenté à la figure 3 un exemple d'algorithme numérique programmé dans les moyens de calcul numérique adapté à l'utilisation d'un système de mesure comprenant un organe déprimogène du type convergent. L'algorithme se rapportant au procédé consistant à déterminer le débit instantané à partir de la différence de pression comporte 3 étapes. Les moyens de calcul comportent des moyens aptes à mettre en oeuvre ces étapes.

On acquiert un signal représentatif de la différence de pression toutes les Te secondes.

La première étape 13 consiste à déterminer la condition initiale permettant la résolution de l'équation différentielle. Préférentiellement on choisira comme condition initiale $q_0 = q(t=0) = 0$ lorsque le débit change de sens.

Dans la deuxième étape 14, on acquiert une différence de pression $P_n$.

Dans une troisième étape 15, on calcule la valeur $q_{n+1}$ correspondant au débit recherché en discrétisant l'équation différentielle reliant le débit instantané à la différence de pression, par exemple à l'aide de la formule :

$$q_{n+1} = q_n \times (1 - \alpha \times | \, q_n | \times Te) + \beta \times P_n \times T_e.$$

On obtient en sortie de la troisième étape 15 la valeur de $q_{n+1}$ calculée à partir de $q_n$ et de Pn.

En réitérant ainsi de suite les étapes 14 et 15, la sortie q du moyen de calcul numérique fournit, à partir du signal de pression différentielle P échantillonné selon la base de temps $T_e$, une suite de valeurs discrètes $q_0$, $q_1$. ... $q_n$ qui converge vers la solution instantanée de l'équation différentielle.

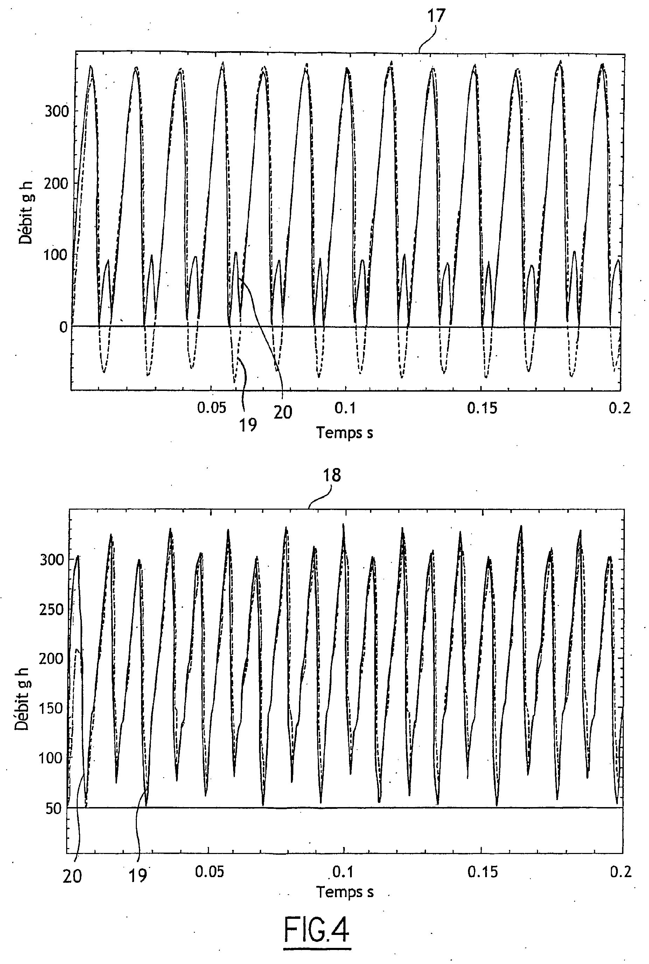

La figure 4 montre un exemple de résultats obtenus en utilisant le dispositif de la figure 1. L'évolution d'un débit pulsé en conduite est mesurée par l'invention et comparée avec le débit reconstitué à partir de la vitesse du fluide déterminée par un fil chaud placé au centre de la conduite.

Le premier graphique 17 et le deuxième graphique 18 de la figure 4 présentent l'évolution du débit dans une conduite en fonction du temps. Les traits pointillés représentent les résultats obtenus avec le dispositif de la présente invention. Les traits pleins représentent les résultats obtenus avec le dispositif de mesure par fil chaud.

On peut remarquer sur le premier graphique 17 que le dispositif de mesure par fil chaud, qui est incapable par conception de donner le sens de l'écoulement, donne toujours un débit positif, même lorsque celui-ci s'inverse. Ce n'est pas le cas du système de la présente invention qui suit parfaitement les inversions de sens de l'écoulement. Ceci est dû au fait que le système de mesure de la présente invention tient compte du sens de l'écoulement.

On peut remarquer sur le deuxième graphique 18 que le dispositif de la présente invention possède une très bonne résolution en temps (grande bande passante) puisque la pulsation atteinte dans le deuxième graphique de la figure 4 est proche de 90 Hz.

Le système de mesure de pression de la présente invention permet donc la mesure du débit d'un fluide en écoulement instationnaire en conduite. Il ne nécessite que deux prises de pression statique, et autorise n'importe quelle fluctuation de l'écoulement, y compris des inversions de sens. Ceci est rendu possible par la résolution de la formule reliant le débit à la différence de pression et permettant de calculer le débit en temps réel et donnant en outre le sens de l'écoulement.

Le lecteur aura compris que de nombreuses variantes de la présente invention peuvent être mises en place.

Par exemple l'organe déprimogène 1 pourrait être un venturi, un diaphragme, ou tout dispositif introduisant une perte de charge dans l'écoulement.

Par ailleurs, le moyen de calcul pourrait être d'un autre type que ceux évoqués aux figures 2 et 3, la particularité de ce moyen de calcul étant d'être adapté à la résolution d'une formule reliant le débit à la différence de pression, ladite formule permettant de calculer le débit du fluide et de rendre compte du sens de l'écoulement du fluide.

En outre, des améliorations peuvent être apportées au système et au procédé de la présente invention.

Le débit mesuré ici était le débit volumique q(t) d'un fluide incompressible en écoulement instationnaire dans une conduite. Cependant, il est possible de remonter au débit massique $q_m$ en faisant le produit du débit mesuré par la masse volumique $\rho$ du fluide. Cette masse volumique est fonction principalement de la température du fluide et de la pression statique absolue.

Donc, en ajoutant une sonde de mesure de température au dispositif de la figure 1, et en utilisant la fonction p(T) donnant la masse volumique du fluide en fonction de la température dans les moyens de calcul, il est possible de remonter au débit massique à partir du débit volumique mesuré, sachant que l'on a :

$$q_m(t) = \rho \, (T) \times q(t).$$

L'introduction dans le moyen de calcul de moyens aptes à obtenir la masse volumique p(T) du fluide à partir de la mesure de température obtenue à l'aide de la sonde de mesure de température, et de moyens aptes à effectuer le produit du débit volumique q(t) par la masse volumique p(T), il est possible de remonter au débit massique d'un fluide incompressible en écoulement instationnaire dans une conduite.

Par ailleurs, la mesure de la pression statique absolue en plus de la température permet de prendre en compte les effets de compressibilité du fluide et par là d'étendre les applications de la présente invention aux écoulements compressibles (cette pression statique absolue mesurée peut également être prise en compte dans l'obtention de la masse volumique $\rho$ d'un fluide incompressible afin que le débit massique calculé soit plus précis).

Donc en ajoutant une sonde de mesure de température, et une sonde de mesure de pression statique absolue au dispositif de la figure 1, et en adaptant le moyen de calcul de sorte qu'il reçoive en entrée la différence de pression mesurée par le moyen 2 de mesure de pression différentielle, la mesure de température mesurée par la sonde de mesure de température et la mesure de pression statique mesurée par la sonde de mesure de pression statique, il est possible de calculer le débit massique d'un fluide compressible en écoulement instationnaire dans une conduite à partir de la formule reliant le débit à une différence de pression, ladite formule prenant en compte le sens de l'écoulement du fluide.

De plus, le moyen de mesure de pression différentielle peut être différent d'un capteur de pression différentielle. Par exemple, les deux prises de pressions peuvent être reliées à deux sondes de mesure de pressions relatives, on obtiendrait alors en sortie des sondes les pressions statiques relatives P1 et P2. La différence entre ces deux pressions statiques relatives P1 et P2 peut alors être obtenue soit à l'aide d'un boîtier électronique apte à effectuer une différence entre les deux pressions statiques relatives mesurées, et situé entre les deux sondes de mesure et le moyen de calcul, soit à l'aide du moyen 3 de calcul s'il est prévu dans celui-ci des moyens pour obtenir cette différence. Chacune des première et deuxième prises de pression peut également être constituée par une pluralité de prises de pression élémentaires raccordées entre elles et réparties sur la périphérie de la conduite.

Dans ce cas, la première prise de pression comprend plusieurs prises élémentaires de pression situées dans un premier plan perpendiculaire à l'axe de la conduite. La pression mesurée grâce à la première prise de pression est alors égale à la moyenne des pressions mesurée à l'aide des prises de pression élémentaires de la première prise de pression. De même, la deuxième prise de pression comprend plusieurs prises élémentaires de pression situées dans un deuxième plan perpendiculaire à l'axe de la conduite, les premier et deuxième plans étant distincts. La pression mesurée grâce à la deuxième prise de pression est alors égale à la moyenne des pressions mesurée à l'aide des prises de pression élémentaires de la deuxième prise de pression.

## Revendications

1.  Système de mesure en temps réel du débit instantané d'un fluide en écoulement stationnaire ou instationnaire dans une conduite, comportant :

    - un organe déprimogène (1) placé dans la conduite, ledit organe déprimogène (1) étant muni de deux prises (A, B) de pression en paroi,
    - un moyen (2) de mesure d'une différence de pression apte à être raccordé aux deux prises (A, B) de pression,
    - un moyen (3) de calcul adapté pour calculer le débit en temps réel par la résolution d'une formule reliant le débit instantané à la différence de pression, cette dernière dans ladite formule étant positive ou négative en fonction de la variation de la vitesse d'écoulement du fluide dans la conduite et/ou du sens de l'écoulement du fluide,

    caractérisé en ce que le moyen (3) de calcul est un calculateur électronique analogique comprenant un premier amplificateur (7) connecté à une première entrée d'un soustracteur (8), un intégrateur (9) connecté à une sortie du soustracteur (8), une boucle de contre réaction connectée entre une sortie de l'intégrateur (9) et une deuxième entrée du soustracteur (8), la boucle de contre réaction comportant un module (10) réalisant la fonction valeur absolue connecté à la sortie de l'intégrateur (9) et un multiplicateur (11) connecté par une première entrée à une sortie du module (10) et par une deuxième entrée à la sortie de l'intégrateur (9).

2.  Système selon la revendication 1, caractérisé en ce que la formule comprend un terme représentatif du débit instantané, et un terme représentatif de la dérivée par rapport au temps du débit instantané, chacun de ces deux termes pouvant être positif ou négatif.

3.  Système selon la revendication 1 ou la revendication 2, caractérisé en ce que la formule prenant en compte le sens de l'écoulement est une équation différentielle de la forme :

$$dq(t)/dt + \alpha(q(t)) = \beta \times \Delta p(t),$$

    où q(t) représente le débit instantané recherché,
    dq(t)/dt représente la dérivée par rapport au temps du débit instantané recherché,
    d(q(t)) représente une fonction dépendant de la géométrie du système, du fluide et du débit q(t),
    $\beta$ représente un coefficient fonction de la géométrie du dispositif,

$\Delta p(t)$ représente la différence de pression instantanée mesurée.

4. Système selon l'une quelconque des revendications précédentes, **caractérisé en ce qu'**il comporte en outre une sonde de mesure de température.

5. Système selon la revendication 4, **caractérisé en ce que** le moyen de calcul est apte à obtenir la masse volumique du fluide à l'aide de la mesure de température mesurée par la sonde de mesure de température et à calculer le débit instantané massique du fluide.

6. Système selon la revendication 3 ou 4, **caractérisé en ce qu'**il comporte en outre une sonde de mesure de pression statique absolue.

7. Système selon la revendication 5, **caractérisé en ce que** le moyen (3) de calcul est apte à calculer en temps réel le débit instantané massique d'un fluide compressible en temps réel grâce à la prise en compte de la mesure de pression statique absolue et de la mesure de température et par la résolution de la formule reliant le débit instantané à la différence de pression, ladite formule prenant en compte le sens de l'écoulement du fluide.

8. Système selon l'une quelconque des revendications précédentes, **caractérisé en ce que** l'organe déprimogène est un convergent.

9. Système selon l'une quelconque des revendications précédentes, **caractérisé en ce que** l'organe déprimogène (1) est un diaphragme.

10. Système selon l'une quelconque des revendications précédentes, **caractérisé en ce que** l'organe déprimogène (1) est un venturi.

11. Système selon l'une quelconque des revendications précédentes, **caractérisé en ce que** le moyen (2) de mesure d'une différence de pression est un capteur de pression différentielle raccordé aux deux prises de pression.

12. Système selon l'une quelconque des revendications 1 à 9, **caractérisé en ce que** le moyen de mesure d'une différence de pression est un ensemble de deux capteurs de pression relative raccordé aux deux prises de pression.

13. Procédé de mesure du débit d'un fluide en écoulement stationnaire ou instationnaire dans une conduite à l'aide d'un système de mesure selon l'une quelconque des revendications précédentes, **caractérisé en ce qu'**il comprend les étapes consistant à :

    - mesurer, quelques soient les fluctuations de l'écoulement, une différence entre deux pressions au niveau des deux prises (A, B) de pression en paroi de l'organe déprimogène,
    - calculer le débit du fluide par la résolution d'une formule reliant le débit et la différence de pression, cette dernière dans ladite formule étant positive ou négative en fonction de la variation de la vitesse d'écoulement du fluide dans la conduite et/ou du sens de l'écoulement du fluide.

14. Procédé selon la revendication 13, **caractérisé en ce que** la formule comprend un terme représentatif de la différence de pression, un terme représentatif du débit instantané, et un terme représentatif de la dérivée par rapport au temps du débit instantané, chacun de ces trois termes pouvant être positif ou négatif.

15. Procédé selon la revendication 13 ou la revendication 14, **caractérisé en ce que** la deuxième étape du procédé consiste à calculer le débit du fluide en écoulement instationnaire par résolution d'une équation différentielle reliant le débit et la différence de pression mesurée :

$$dq(t)/dt + \alpha(q(t)) = \beta \times \Delta p(t)$$

    où $q(t)$ représente le débit instantané recherché,
    $dq(t)/dt$ représente la dérivée par rapport au temps du débit instantané recherché,
    $\alpha(q(t))$ représente une fonction dépendant de la géométrie du système, du fluide et du débit instantané $q(t)$,
    $\beta$ représente un coefficient fonction de la géométrie du dispositif,

Δp(t) représente la différence de pression instantanée mesurée.

16. Procédé selon la revendication 15, **caractérisé en ce que** le sens de l'écoulement est pris en compte dans le terme α(q(t)) dépendant de la géométrie du système et du débit q(t).

17. Procédé selon l'une quelconque des revendications 13 à 16, **caractérisé en ce qu'**il comprend en outre une étape d'acquisition de la température du fluide.

18. Procédé selon l'une quelconque des revendications 13 à 17, **caractérisé en ce qu'**il comprend en outre une étape d'acquisition de la pression statique absolue du fluide.

19. Procédé selon les revendications 17 et 18, **caractérisé en ce que** la température du fluide et la pression statique absolue du fluide sont prises en compte dans la formule prenant en compte le sens de l'écoulement.

20. Procédé selon la revendication 19, **caractérisé en ce qu'**il permet le calcul en temps réel du débit instantané d'un fluide compressible en écoulement instationnaire dans une conduite, ledit calcul du débit étant obtenu par résolution d'une formule reliant le débit à la différence de pression, la pression statique absolue du fluide et la température du fluide.

**Patentansprüche**

1. System zum Messen in Echtzeit des momentanen Durchflusses eines in einer Leitung stetig oder unstetig fließenden Fluids, aufweisend:

   - ein in der Leitung platziertes Unterdruckorgan (1), wobei das Unterdruckorgan (1) mit zwei Wanddruckanschlussstellen (A, B) ausgestattet ist,
   - ein Messmittel (2) einer Druckdifferenz, das imstande ist, mit den zwei Druckanschlussstellen (A, B) verbunden zu sein,
   - ein Rechenmittel (3), das ausgebildet ist, um den Durchfluss in Echtzeit durch Auflösen einer Formel zu berechnen, die den momentanen Durchfluss mit der Druckdifferenz verbindet, wobei diese in Abhängigkeit von der Änderung der Fließgeschwindigkeit des Fluids in der Leitung und/oder der Fließrichtung des Fluids in der Formel positiv oder negativ ist,

   **dadurch gekennzeichnet, dass** das Rechenmittel (3) ein analoger elektronischer Rechner ist, umfassend einen ersten Verstärker (7), der mit einem ersten Eingang eines Subtrahierers (8) verbunden ist, einen Integrator (9), der mit einem Ausgang des Subtrahierers (8) verbunden ist, eine Gegenreaktionsschleife, die zwischen einem Ausgang des Integrators (9) und einem zweiten Eingang des Subtrahierers (8) verbunden ist, wobei die Gegenreaktionsschleife ein Modul (10) aufweist, das die Funktion absoluter Wert durchführt, das mit dem Ausgang des Integrators (9) verbunden ist, und einen Multiplikator (11), der über einen ersten Eingang mit einem Ausgang des Moduls (10) und über einen zweiten Eingang mit dem Ausgang des Integrators (9) verbunden ist.

2. System nach Anspruch 1, **dadurch gekennzeichnet, dass** die Formel einen Term umfasst, der für den momentanen Durchfluss repräsentativ ist, und einen Term, der für die Ableitung in Bezug zur Zeit des momentanen Durchflusses repräsentativ ist, wobei jeder dieser zwei Terme positiv oder negativ sein kann.

3. System nach Anspruch 1 oder Anspruch 2, **dadurch gekennzeichnet, dass** die Formel, welche die Fließrichtung berücksichtigt, eine Differentialgleichung der Form ist:

$$dq(t)/dt + \alpha(q(t)) = \beta \times \Delta p(t),$$

wobei

q(t) den gesuchten momentanen Durchfluss darstellt,
dq(t)/dt die Ableitung in Bezug zur Zeit des gesuchten momentanen Durchflusses darstellt,
α(q(t)) eine Funktion darstellt, die von der Geometrie des Systems, vom Fluid und vom Durchfluss q(t) abhängt,

β einen Koeffizienten darstellt, der Funktion der Geometrie der Vorrichtung ist,
Δp(t) die momentane gemessene Druckdifferenz darstellt.

4. System nach einem der vorangehenden Ansprüche, **dadurch gekennzeichnet, dass** es ferner eine Temperaturmesssonde aufweist.

5. System nach Anspruch 4, **dadurch gekennzeichnet, dass** das Rechenmittel imstande ist, die volumenbezogene Masse des Fluids mit Hilfe der von der Temperaturmesssonde gemessenen Temperaturmessung zu ermitteln und den momentanen Mengendurchfluss des Fluids zu berechnen.

6. System nach Anspruch 3 oder 4, **dadurch gekennzeichnet, dass** es ferner eine Messsonde des absoluten statischen Drucks aufweist.

7. System nach Anspruch 5, **dadurch gekennzeichnet, dass** das Rechenmittel (3) imstande ist, den momentanen Mengendurchfluss eines komprimierbaren Fluids in Echtzeit dank der Berücksichtigung der Messung des absoluten statischen Drucks und der Temperaturmessung und durch die Auflösung der Formel, welche den momentanen Durchfluss mit der Druckdifferenz verbindet, in Echtzeit zu berechnen, wobei die Formel die Fließrichtung des Fluids berücksichtigt.

8. System nach einem der vorangehenden Ansprüche, **dadurch gekennzeichnet, dass** das Unterdruckorgan ein Einlauf ist.

9. System nach einem der vorangehenden Ansprüche, **dadurch gekennzeichnet, dass** das Unterdruckorgan (1) eine Membran ist.

10. System nach einem der vorangehenden Ansprüche, **dadurch gekennzeichnet, dass** das Unterdruckorgan (1) ein Venturi ist.

11. System nach einem der vorangehenden Ansprüche, **dadurch gekennzeichnet, dass** das Messmittel (2) einer Druckdifferenz ein Differentialdrucksensor ist, der mit zwei Druckanschlussstellen verbunden ist.

12. System nach einem der Ansprüche 1 bis 9, **dadurch gekennzeichnet, dass** das Messmittel einer Druckdifferenz eine Einheit von zwei Relativdruckmessern ist, die mit zwei Druckanschlussstellen verbunden ist.

13. Messverfahren des Durchflusses eines in einer Leitung stetig oder unstetig fließenden Fluids mit Hilfe eines Messsystems nach einem der vorangehenden Ansprüche, **dadurch gekennzeichnet, dass** es die folgenden Schritte umfasst:

    - Messen, unabhängig von den Fließfluktuationen, einer Differenz zwischen zwei Drücken im Bereich der zwei Wanddruckanschlussstellen (A, B) des Unterdruckorgans,
    - Berechnen des Durchflusses des Fluids durch die Auflösung einer Formel, welche den Durchfluss und die Druckdifferenz verbindet, wobei diese in der Formel in Abhängigkeit von der Schwankung der Fließgeschwindigkeit des Fluids in der Leitung und/oder der Fließrichtung des Fluids positiv oder negativ ist.

14. Verfahren nach Anspruch 13, **dadurch gekennzeichnet, dass** die Formel einen Term, der für die Druckdifferenz repräsentativ ist, einen Term, der für den momentanen Durchfluss repräsentativ ist, und einen Term, der für die Ableitung in Bezug zur Zeit des momentanen Durchflusses repräsentativ ist, umfasst, wobei jeder dieser drei Terme positiv oder negativ sein kann.

15. Verfahren nach Anspruch 13 oder Anspruch 14, **dadurch gekennzeichnet, dass** der zweite Schritt des Verfahrens darin besteht, den Durchfluss des unstetig fließenden Fluids durch Auflösung einer Differentialgleichung zu berechnen, welche den Durchfluss und die gemessene Druckdifferenz verbindet:

$$dq(t)/dt + \alpha(q(t)) = \beta \times \Delta p(t),$$

wobei

q(t) den gesuchten momentanen Durchfluss darstellt,

dq(t)/dt die Ableitung in Bezug zur Zeit des gesuchten momentanen Durchflusses darstellt,

$\alpha$(q(t)) eine Funktion darstellt, die von der Geometrie des Systems, vom Fluid und vom Durchfluss q(t) abhängt,

$\beta$ einen Koeffizienten darstellt, der Funktion der Geometrie der Vorrichtung ist,

$\Delta$p(t) die momentan gemessene Druckdifferenz darstellt.

16. Verfahren nach Anspruch 15, **dadurch gekennzeichnet, dass** die Fließrichtung in dem Term $\alpha$(q(t)) berücksichtigt ist, der von der Geometrie des Systems und vom Durchfluss q(t) abhängig ist.

17. Verfahren nach einem der Ansprüche 13 bis 16, **dadurch gekennzeichnet, dass** es ferner einen Erfassungsschritt der Temperatur des Fluids umfasst.

18. Verfahren nach einem der Ansprüche 13 bis 17, **dadurch gekennzeichnet, dass** es ferner einen Erfassungsschritt des absoluten statischen Drucks des Fluids umfasst.

19. Verfahren nach einem der Ansprüche 17 und 18, **dadurch gekennzeichnet, dass** die Temperatur des Fluids und der absolute statische Druck des Fluids in der Formel berücksichtigt sind, welche die Fließrichtung berücksichtigt.

20. Verfahren nach Anspruch 19, **dadurch gekennzeichnet, dass** es die Berechnung in Echtzeit des momentanen Durchflusses eines in einer Leitung unstetig fließenden komprimierbaren Fluids erlaubt, wobei die Berechnung des Durchflusses durch die Auflösung der Formel erfolgt, welche den Durchfluss mit der Druckdifferenz, dem absoluten statischen Druck des Fluids und der Temperatur des Fluids verbindet.

**Claims**

1. A system for the measurement, in real time, of the instantaneous flow of a fluid in steady or unsteady motion in a conduit, including:

    - a negative-pressure element (1) placed in the conduit, wherein said negative-pressure element (1) is equipped with two pressure taps (A, B) in the wall,
    - a pressure-difference measuring means (2) adapted to be connected to two pressure taps (A, B),
    - a calculation means (3) adapted to calculate the flow, in real time, by solving an equation that relates the instantaneous flow to the pressure difference, wherein the latter is positive or negative in said equation depending on variations in the speed of fluid flow in the conduit and/or the direction of the fluid flow, **characterized in that** the calculation means (3) is an analogue electronic calculator comprising a first amplifier (7) connected to a first input of a subtractor (8), an integrator (9) connected to an output of the subtractor (8), a feedback loop connected between an output of the integrator (9) and a second input of the subtractor (8), wherein the feedback loop includes a module (10) producing the absolute value function connected to the output of the integrator (9), and a multiplier (11) which is connected by a first input to an output of the module (10) and by a second input to the output of the integrator (9).

2. The system according to claim 1, **characterized in that** the equation comprises a term representing the instantaneous flow, and a term representing the differential coefficient with time of the instantaneous flow, wherein each of these two terms can be positive or negative.

3. The system according to claim 1 or claim 2, **characterized in that** the equation taking account of the direction of the flow is a differential equation of the form:

$$dq(t)/dt + \alpha(q(t)) = \beta \times \Delta p(t),$$

wherein

q(t) represents the wanted instantaneous flow,

dq(t)/dt represents the differential coefficient with time of the wanted instantaneous flow,

$\alpha$(q(t)) represents a function that depends on the geometry of the system, of the fluid and of the flow q(t),

β represents a coefficient that depends on the geometry of the device,
Δp(t) represents the measured instantaneous pressure difference.

4. The system according to any one of the preceding claims, **characterized in that** it further includes a temperature measuring probe.

5. The system according to claim 4, **characterized in that** the calculation means is designed to ascertain the density of the fluid by having the temperature measured by the temperature measuring probe and calculating the instantaneous mass flow of the fluid.

6. The system according to claim 3 or 4, **characterized in that** it further includes a probe for measuring absolute static pressure.

7. The system according to claim 5, **characterized in that** the calculation means (3) is designed to calculate, in real time, the instantaneous mass flow of a fluid that is compressible in real time, by means of an absolute static pressure measurement and a temperature measurement, and by solving the equation relating the instantaneous flow to the pressure difference, wherein said equation takes account of the direction of the fluid flow.

8. The system according to any one of the preceding claims, **characterized in that** the negative-pressure element is a converging portion.

9. The system according to any one of the preceding claims, **characterized in that** the negative-pressure element (1) is a diaphragm.

10. The system according to any one of the preceding claims, **characterized in that** the negative-pressure element (1) is a venturi.

11. The system according to any one of the preceding claims, **characterized in that** the pressure difference measuring means (2) is a differential pressure sensor connected to the two pressure taps.

12. The system according to any one of the preceding claims, **characterized in that** the means of measuring a pressure difference is a set of two relative pressure sensors connected to the two pressure taps.

13. A method for measuring the flow of a fluid in steady or unsteady motion in a conduit using a measurement system according to any one of the preceding claims, **characterized in that** it comprises the following steps:

- measurement of a difference between two pressures at the two pressure taps (A, B) in the wall of the negative-pressure element, irrespective of fluctuations in the flow,
- calculation of the flow of the fluid by solving an equation relating the flow and the pressure difference, wherein the latter is positive or negative in said equation depending on variation of the speed of the fluid flow in the conduit and/or the direction of the fluid flow.

14. The method according to claim 13, **characterized in that** the equation comprises a term representing the pressure difference, a term representing the instantaneous flow, and a term representing the differential coefficient with time of the instantaneous flow, wherein each of these three terms can be positive or negative.

15. The method according to claim 13 or claim 14, **characterized in that** the second step of the method consists of calculating the flow of the fluid in unsteady motion by solving a differential equation relating the flow and the measured pressure difference:

$$\mathrm{dq(t)/dt} + \alpha(\mathrm{q(t)}) = \beta \times \Delta\mathrm{p(t)},$$

wherein

q(t) represents the wanted instantaneous flow,
dq(t)/dt represents the differential coefficient with time of the wanted instantaneous flow,

$\alpha(q(t))$ represents a function that depends on the geometry of the system, of the fluid and of the flow q(t),
$\beta$ represents a coefficient that depends on the geometry of the device,
$\Delta p(t)$ represents the measured instantaneous pressure difference.

16. The method according to claim 15, **characterized in that** the direction of the flow is included in the term $\alpha(q(t))$ which depends on the geometry of the system and the flow q(t).

17. The method according to any one of claims 13 to 16, **characterized in that** it further comprises a step for acquisition of the fluid temperature.

18. The method according to any one of claims 13 to 17, **characterized in that** it further comprises a step for acquisition of the absolute static pressure of the fluid.

19. The method according to one of claims 17 and 18, **characterized in that** the fluid temperature and the absolute static pressure of the fluid are included in the equation taking account of the direction of the flow.

20. The method according to claim 19, **characterized in that** it allows the calculation, in real time, of the instantaneous flow of a compressible fluid in unsteady motion in a conduit, wherein said flow calculation is achieved by solving an equation relating the flow to the pressure difference, the absolute static pressure of the fluid, and the fluid temperature.

$\Delta P$

P1

P2

B

A

q(t)

3

2

1    4    5    6

FIG.1

FIG.2

INITIALISATION : $q = q_0$ ⌐13

ACQUISITION DE $P_n$ ⌐14

$q_{n+1} = q_n \times (1 - \alpha \times |q_n| \times Te) + \beta \times Te \times P_n$ ⌐15

$q_{n+1}$ ⌐16

FIG.3

FIG.4

**RÉFÉRENCES CITÉES DANS LA DESCRIPTION**

**Documents brevets cités dans la description**

- DE 2459811
- US 2003136196 A
- EP 0496661 A